(19) Europäisches Patentamt

European Patent Office

Office européen des brevets

(11) **EP 1 248 483 A1**

(12) **EUROPEAN PATENT APPLICATION**

(43) Date of publication:
    **09.10.2002 Bulletin 2002/41**

(51) Int Cl.⁷: **H04Q 7/38**

(21) Application number: **01309272.1**

(22) Date of filing: **31.10.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **Wong, Marcus**<br>**Piscataway, New Jersey 08854 (US)** |
| (30) Priority: **05.04.2001  US 827226** | (74) Representative:<br>**Buckley, Christopher Simon Thirsk et al**<br>**Lucent Technologies NS UK Limited,**<br>**Intellectual Property Division,**<br>**5 Mornington Road** |
| (71) Applicant: **LUCENT TECHNOLOGIES INC.**<br>**Murray Hill, New Jersey 07974-0636 (US)** | **Woodford Green, Essex IG8 0TU (GB)** |

(54)    **System and method for providing secure communications between wireless units using a common key**

(57)    A system and method uses a common key provided to a first wireless unit and a second wireless unit to use in secure communications between the first and second wireless units over at least one wireless communications system. By providing a common key to the first and second wireless units, the common key security system alleviates the at least one wireless communications system from having to perform the security methods used to provide secure communications between the first and second wireless units. For example, the encryption/decryption of the communications between the first wireless unit and the second wireless unit can be performed at the first and second wireless units using the common key. In certain embodiments, the first and second wireless units and the serving wireless communications system(s) still perform authentication and obtain keys $CK_1$ and $CK_2$ as described above. However, instead of using the keys $CK_1$ and $CK_2$ to encrypt/decrypt communications between the first and second wireless units at the serving wireless communications system(s), a common key at the first wireless unit is used to encrypt/decrypt information which is decrypted/encrypted at the second wireless unit using the common key. The common key can be generated by the wireless communications system(s) and provided to the first and second wireless units by the serving wireless communications system(s) which can use the respective keys $CK_1$ and $CK_2$ to securely provide the common key to the first and second wireless units. Once the receipt of the common key by the first and second wireless units is verified, the first and second wireless units can securely communicate with each other using the common key, and the serving wireless communications system(s) can simply act as a conduit for the communications between the first and second wireless units.

FIG. 3a

EP 1 248 483 A1

**Description**

BACKGROUND OF THE INVENTION

**1. Field of The Invention**

The present invention relates to communications; more specifically, the generation, distribution and/or use of a common key to provide secure communications between wireless units.

**2. Description of Related Art**

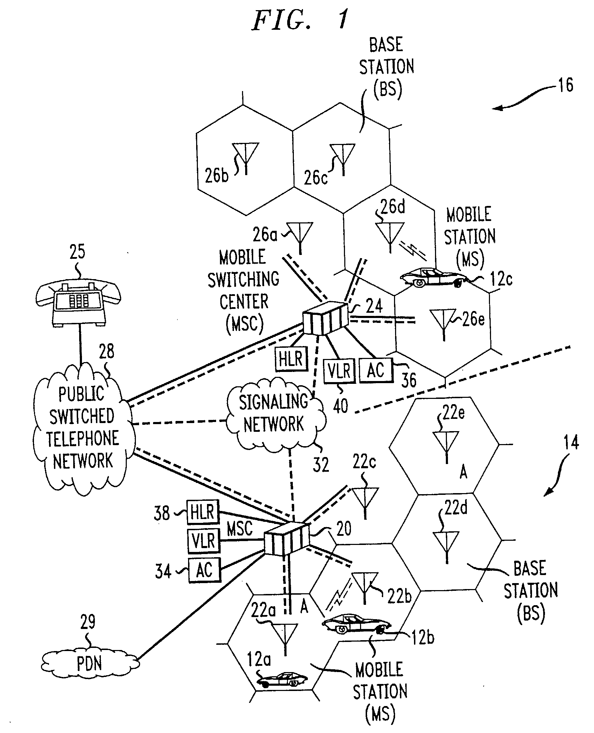

FIG. 1 depicts a schematic diagram of first and second wireless communications systems which provide wireless communications service to wireless units (e.g., wireless units 12a-c) that are situated within the geographic regions 14 and 16, respectively. A Mobile Switching Center (e.g. MSCs 20 and 24) is responsible for, among other things, establishing and maintaining calls between the wireless units, calls between a wireless unit and a wireline unit (e.g., wireline unit 25), and/or connections between a wireless unit and a packet data network (PDN), such as the internet. As such, the MSC interconnects the wireless units within its geographic region with a public switched telephone network (PSTN) 28 and/or a packet data network (PDN) 29. The geographic area serviced by the MSC is divided into spatially distinct areas called "cells." As depicted in FIG. 1, each cell is schematically represented by one hexagon in a honeycomb pattern; in practice, however, each cell has an irregular shape that depends on the topography of the terrain surrounding the cell.

Typically, each cell contains a base station (e.g. base stations 22a-e and 26a-e), which comprises the radios and antennas that the base station uses to communicate with the wireless units in that cell. The base stations also comprise the transmission equipment that the base station uses to communicate with the MSC in the geographic area. For example, MSC 20 is connected to the base stations 22a-e in the geographic area 14, and an MSC 24 is connected to the base stations 26a-e in the geographic region 16. The MSCs 20 and 24 use a signaling network 32, such as a signaling network conforming to the standard identified as TIA/EIA-41-D entitled "Cellular Radiotelecommunications Intersystem Operations," December 1997 ("IS-41"), which enables the exchange of information between the wireless communications systems.

In the example of FIG. 1, the wireless unit 12a is located within the geographic area 14 of the MSC 20 to which the wireless unit 12a was originally assigned (e.g. the home MSC). Before being allowed access to the wireless communications system, the wireless unit 12a is authenticated. The wireless unit 12a sends an access request to the base station 22a. In response to the access request, a home authentication center 34 accesses a home location register (HLR) 38 which has a registration entry for wireless unit 12a. The home location register entry may be associated with the wireless unit 12a by an identifier such as the wireless unit's telephone number. The information contained in the HLR 38 can include and/or is used to generate authentication keys for authenticating the wireless unit and /or encryption keys to further secure communications between the wireless unit and the communications system as would be understood by one of skill in the art.

When a wireless unit 12c leaves the geographic area 14 of the MSC 20 to which it was originally assigned (e.g. home MSC), the authentication of the wireless unit 12c involves communicating with the home authentication center 34 of the wireless unit's home communications system. When the wireless unit 12c attempts to access the visiting communications system, base station 26d communicates with a visiting authentication center 36 of the visiting communication system. The visiting authentication center 36 determines from a wireless unit or terminal identifier, such as the telephone number of wireless unit 12c, that the wireless unit 12c is registered with a system that uses the home authentication center 34. Visiting authentication center 36 then communicates with the home authentication center 34 over a network, such as the signaling network 32. The home authentication center 34 then accesses the home location register (HLR) 38 entry for the wireless unit 12c to access information which includes and/or is used to generate the authentication and/or encryption keys.

In a 2G GSM system, the wireless unit and the home location register each have the same root key K; which is used to generate a session key $K_c$. After the wireless unit is successfully authenticated, the 64 bits long $K_c$ session or ciphering key is used for user information confidentiality by encrypting/decrypting information being sent between the wireless unit and the wireless communications system. When the wireless unit roams into another system while in the call, the session key $K_C$ is forwarded to the new serving system.

In the UMTS security scheme, the wireless unit and the home location register each produce a session security or ciphering key CK using the root key $K_i$. The wireless unit also calculates the 128 bit ciphering key CK using the root key $K_i$. After the wireless unit is successfully authenticated, the ciphering key CK is activated to encrypt/decrypt information being sent between the wireless unit and the wireless communications system. If the wireless unit roams into another serving system while on the call, the ciphering key CK is sent to the new target serving system.

In the 2G IS-41 system used in U.S. TDMA and CDMA systems, the wireless unit and the home location register (HLR) have a root key, known as the A_key. There is a secondary key, known as Shared Secret Data SSD, which is sent to the VLR of the serving system during roaming. SSD is generated from the A_key using a cryptographic algorithm known to those skilled in the art. Using the current value of SSD and a random number, session security keys are calculated by the wireless unit and the serving system. Specifically, the 520 bits Voice Privacy Mask (VPM) is computed, which is used for concealing the TDMA speech data throughout the call. This VPM is derived at the beginning of the call by the wireless unit and the wireless communications system, and, if the mobile roams into another serving system during the call, the VPM is sent to the new serving system by the old VLR. Likewise, the 64 bits Signaling Message Encryption Key (SMEKEY) is computed, which is used for encrypting the TDMA signaling information throughout the call. This SMEKEY is derived at the beginning of the call by the wireless unit and the serving system, and, if the mobile roams into another serving system during the call, the SMEKEY is sent to the new serving system by the VLR.

The 2G CDMA scheme uses a similar method of key distribution, except, instead of the 520 bits VPM, it is using the 42 Least Significant Bits (LSB) of the VPM as a seed into the Private Long Code Mask (PLCM). This PLCM is used as an additional scrambling mask for the information before its spreading. The 42-bit PLCM is consistent throughout the call and is sent to the new serving system by the VLR of the serving system if the mobile roams into another serving system. The SMEKEY is used in the same way as in the TDMA based scheme.

The IS-41 3G security scheme uses the UMTS security scheme, which is based on the delivery of the 128-bits ciphering key CK computed by both the wireless unit and the wireless communications system.

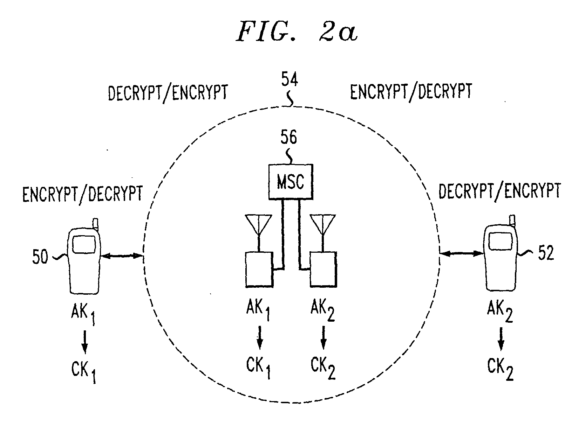

FIG. 2a shows an illustrative example of how secure communications are provided by current wireless communications systems where a first wireless unit 50 is communicating with a second wireless unit 52 in the same wireless communications system 54, for example using the same MSC 56. The first wireless unit 50 and the wireless communications system 54 each have a session key $CK_1$ which is a function of the root key $A_{K1}$ stored at the wireless unit and at the home location register entry for the wireless unit. Communications between the first wireless unit 50 and the wireless communications system 54 are encrypted/decrypted using the session key $CK_1$. In similar fashion, the second wireless unit 52 and the wireless communications system 54 each have a session key $CK_2$ which is a function of the root key $A_{K2}$ stored at the wireless unit and at the home location register entry for the wireless unit. Communications between the second wireless unit 52 and the wireless communications system 54 are encrypted/decrypted using the session key $CK_2$.

As such, communications between the first wireless unit 50 and the second wireless unit 52 require a significant amount of processing by the wireless communications system 54. The wireless communications system 54 uses the session key $CK_1$ to encrypt information received from the second wireless unit 52 for transmission to the first wireless unit 50 and to decrypt information received from the first wireless unit 50 for transmission to the second wireless unit 52. The wireless communications system 54 uses the session key $CK_2$ to encrypt information received from the first wireless unit 50 for transmission to the second wireless unit 52 and to decrypt information received from the second wireless unit 52 for transmission to the first wireless unit 50. Thus, using the current schemes requires a significant amount of processing by the wireless communications system for the encryption/decryption of information being sent between the first and second wireless units 50 and 52.

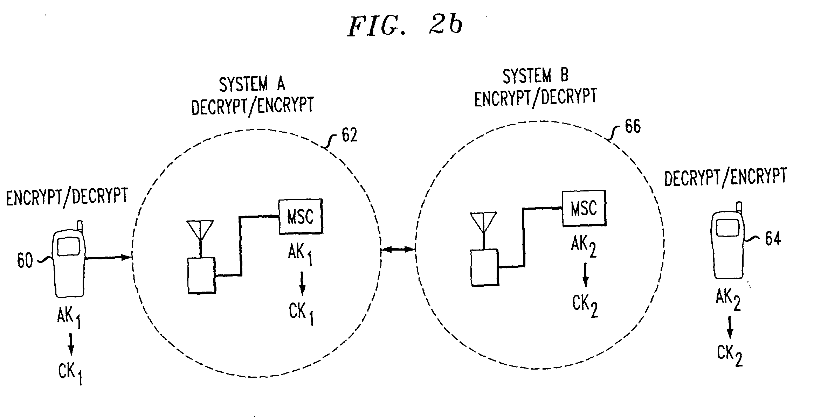

FIG. 2b shows an illustrative example of how secure communications are provided by current wireless communications systems for communications between a first wireless unit 60 using a first wireless communications system 62 and a second wireless unit 64 using a second wireless communications system 66. The first wireless unit 60 and the first wireless communications system 62 each have a session key $CK_1$ which is a function of the root key $A_{K1}$ stored at the wireless unit and at the home location register entry for the wireless unit. Communications between the first wireless unit 60 and the first wireless communications system 62 are encrypted/decrypted using the session key $CK_1$. In similar fashion, the second wireless unit 64 and the second wireless communications system 66 each have a session key $CK_2$ which is a function of the root key $A_{K2}$ stored at the wireless unit and at the home location register entry for the wireless unit. Communications between the second wireless unit 62 and the second wireless communications system 66 are encrypted/decrypted using the session key $CK_2$.

The first and second wireless communications systems must perform a significant amount of processing to encrypt/decrypt information for the communications between the first wireless unit 60 and the second wireless unit 64. For instance, the first wireless communications system 62 uses the session key $CK_1$ to encrypt information received from the second wireless communications system 66 for transmission to the first wireless unit 60 and to decrypt information received from the first wireless unit 60 for the second wireless unit 64. The second wireless communications system 66 uses the session key $CK_2$ to encrypt information received from the first wireless communications system 62 for transmission to the second wireless unit 64 and to decrypt information received from the second wireless unit 64 for the first wireless unit 60. Thus, as in the above example, the current schemes requires a significant amount of processing by the wireless communications systems for the encryption/decryption of information being sent between the first and second wireless units 60 and 64.

## SUMMARY OF THE INVENTION

The present invention is a system and method using a common key provided to a first wireless unit and a second wireless unit to use in secure communications between the first and second wireless units over at least one wireless communications system. By providing a common key to the first and second wireless units, the common key security system alleviates the at least one wireless communications system from having to perform the security methods used to provide secure communications between the first and second wireless units. For example, the encryption/decryption of the communications between the first wireless unit and the second wireless unit can be performed at the first and second wireless units using the common key. In certain embodiments, the first and second wireless units and the serving wireless communications system(s) still perform authentication and obtain keys $CK_1$ and $CK_2$ as described above. However, instead of using the keys $CK_1$ and $CK_2$ to encrypt/decrypt communications between the first and second wireless units at the serving wireless communications system(s), a common key at the first wireless unit is used to encrypt/decrypt information which is decrypted/encrypted at the second wireless unit using the common key. The common key can be generated by the wireless communications system(s) and provided to the first and second wireless units by the serving wireless communications system(s) which can use the respective keys $CK_1$ and $CK_2$ to securely provide the common key to the first and second wireless units. Once the receipt of the common key by the first and second wireless units is verified, the first and second wireless units can securely communicate with each other using the common key, and the serving wireless communications system(s) can simply act as a conduit for the communications between the first and second wireless units.

## BRIEF DESCRIPTION OF THE DRAWINGS

Other aspects and advantages of the present invention may become apparent upon reading the following detailed description and upon reference to the drawings in which:

FIG. 1 shows a general diagram of wireless communications systems in which the common key security system according to the principles of the present invention can be used;
FIG. 2a is a diagram showing an example of how current wireless units securely communicate over the same wireless communications system using session keys;
FIG. 2b is a diagram showing an example of how current wireless units securely communicate over different wireless communications systems using session keys;
FIG.3a is a diagram showing an example of how wireless units securely communicate over the same wireless communications system using the common key security system according to principles of the present invention; and
FIG. 3b is a diagram showing an example of how wireless units securely communicate over different wireless communications systems using the common key security system according to principles of the present invention.

## DETAILED DESCRIPTION

An illustrative embodiment of the common key security system according to the principles of the present invention is described below which provides a common key to a first and second wireless for providing secure communications between the first and second wireless units. Depending on the embodiment, the common key can be an encryption key used for encrypting/decrypting of information transmitted/received by the wireless units or an integrity key used for generating a message authentication code to prevent a message from being modified before the message is received by the intended recipient. The common key can be used to conceal/reveal information transmitted and received by the wireless units or to generate a common mask. For example, a common SSD key could be generated to produce a common VPM in the 2G systems described above. In the embodiment described below, the common key is a session key which is established for the duration of the call or connection. A common key according to principles of the present invention could be used after a call, for example during a different call or session between the same parties.

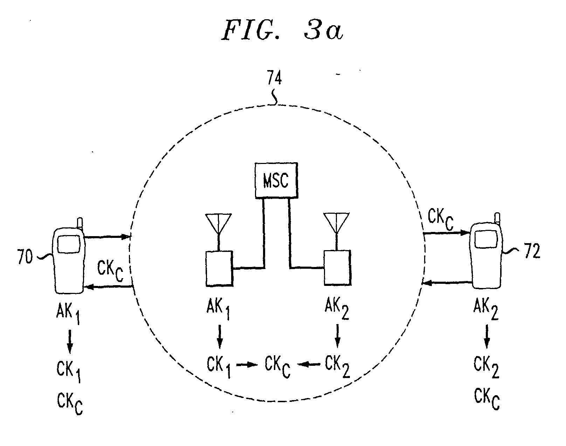

FIG. 3a shows how a first wireless unit 70 and a second wireless unit 72 can securely communicate over the same wireless communications system 74. According to principles of the present invention, the first and second wireless units 70 and 72 use a common key $CK_c$ to enable encryption/decryption at the first and second wireless units while the wireless communications system 74 acts as a conduit for the secure communications. As such, at one end, the first wireless unit 70 uses the common key $CK_c$ to encrypt information which is transmitted to the wireless communications system 74 for the second wireless unit 72. The first wireless unit 70 also uses the common key $CK_c$ to decrypt information received from the wireless communication system 74 from the second wireless unit 72. At the other end, the second wireless unit 72 uses the common key $CK_c$ to encrypt information which is transmitted to the wireless communications system 74 for the first wireless unit 70. Moreover, the second wireless unit 72 uses the common key $CK_c$ to decrypt information received from the wireless communication system 74 from the second wireless unit 72.

In certain embodiments, the first wireless unit 70 and the wireless communications system 74 each have a session key $CK_1$ which is derived as a function of the root key $A_{K1}$ at the first wireless 70 unit and at the home location register for the first wireless unit 70. The second wireless unit 72 and the wireless communications system 74 each have a session key $CK_2$ which is derived as a function of the root key $A_{K2}$ at the second wireless unit 72 and at the home location register for the second wireless unit 70. The wireless communications system can then generate a common session key $CK_c$. The common session key $CK_c$ can be generated in different ways as will be discussed below. After the wireless communications system 74 generates the common session key $CK_c$, the wireless communications system 74 sends the common key $CK_c$ encrypted using the session $CK_1$ to the first wireless unit 70. The wireless communications system 74 also sends the common key $CK_c$ encrypted using the session key $CK_2$ to the second wireless unit 72. The first and second wireless units 70 and 72 now can communicate securely using $CK_c$ as the common encryption/decryption key. Additionally, the wireless communications system 74 no longer needs to decrypt and re-encrypt the communications between the first and second wireless units 70 and 72.

In generating the common key, a number of key generation techniques could be used. For example, the common key $CK_c$ could be generated at the wireless communications system 74 as follows:

$$\text{Let } A = (g^{CK1}) \bmod p$$

$$CK_c = A^{CK2} \bmod p$$

or

$$\text{Let } B = (g^{CK2}) \bmod p$$

$$CK_c = B^{CK1} \bmod p,$$

where p is a large prime number (e.g. 1024 bits) and g is a generator of p. Note, p can be a strong prime number in that p/2-1 is also prime, and g is a generator of p if g < p and there exists a number x where $g^x$ mod p is between 1 and p-1 and there is at least one value of x for every number between 1 and p-1. For example, if p=11, one generator of p=2. Both p and g can be known publicly.

| | |
|---|---|
| For b = 1: | $(2^{10} \bmod 11) = (1024 \bmod 11) = 1 = b$ |
| For b = 2: | $(2^1 \bmod 11) = (2 \bmod 11) = 2 = b$ |
| For b = 3: | $2^8 \bmod 11) = (256 \bmod 11) = 3 = b$ |
| For b = 4: | $(2^2 \bmod 11) = (4 \bmod 11) = 4 = b$ |
| For b = 5: | $(2^4 \bmod 11) = (16 \bmod 11) = 5 = b$ |
| For b = 6: | $(2^9 \bmod 11) = (512 \bmod 11) = 6 = b$ |
| For b = 7: | $(2^7 \bmod 11) = (128 \bmod 11) = 7 = b$ |
| For b = 8: | $(2^3 \bmod 11) = (8 \bmod 11) = 8 = b$ |
| For b = 9: | $(2^6 \bmod 11) = (64 \bmod 11) = 9 = b$ |
| For b = 10: | $(2^5 \bmod 11) = (32 \bmod 11) = 10 = b$ |

Other generators of p are g=6, 7 or 8.

Other key generation techniques are possible which use the session keys CK1 and CK2 or portions thereof as inputs. However, other key generation techniques are possible which use other inputs or additional inputs, such as $A_{key1}$ and $A_{key2}$ or the SSDs for the wireless units (IS-41). One key generation technique could involve using a hashing function. A hash function such as the functions known as known as SHA-1, MD5, RIPE-MD, can be typically characterized as a function which maps an input of one length to an output of another, and given an output, it is not feasible to determine the input that will map to the given output.

Once the common key CKc is generated and distributed to the wireless units, the common key can be used in an encryption process performed at the wireless units, such as a standard encryption algorithm known as Data Encryption Standard (DES) or Advanced Encryption Standard (AES). Depending on the embodiment, the at least one common key CKc can be used to encrypt/decrypt or conceal/reveal communications between the wireless units while the wireless communications system may simply acts as a conduit for the encrypted or concealed communications. Encryption/decryption used herein encompasses concealing/revealing and/or ciphering/deciphering the communications between the wireless units. By having the wireless units perform encryption/decryption using at least one common key for encryption and decryption, the wireless communications system is alleviated from performing encryption/decryption of the communications between the wireless units.

Depending on the embodiment, the common key CKc can be used in different encryption/decryption or security processes at the wireless units, such as a symmetric encryption standard where the same common key can be used to encrypt and decrypt the communications between the wireless units. In one example, the process receives the common key and a cryptosync, such as a frame number, packet number, time stamp, random number or portions and/or combinations thereof which are known to both wireless units, to produce a mask which is exclusive-ored with the data to encrypt the outgoing information and decrypt the incoming information. In 2G CDMA and TDMA systems, the common key CKc could be used to provide secure communications in place of at least portions of the SSDs or any mask or key derived therefrom. In 3G systems, the common key CKc can be used to provide secure communications in place the session keys CK1 and CK2 or any mask or key derived therefrom.

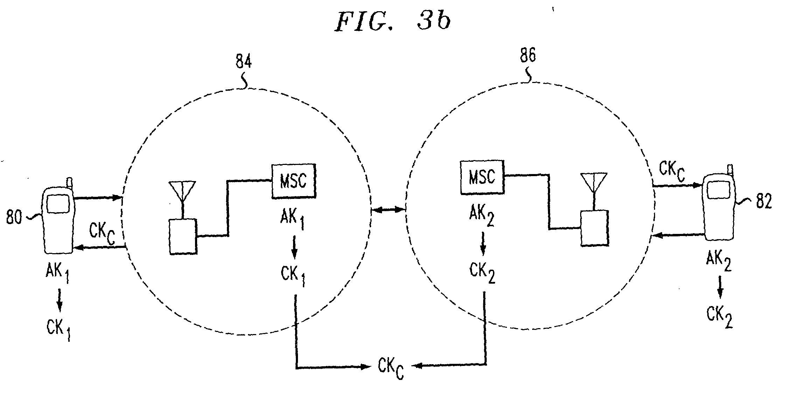

FIG. 3b shows how wireless units 80 and 82 can securely communicate over different wireless communications systems using the common key security system. According to the principles of the present invention, the first and second wireless units 80 and 82 use a common key $CK_c$ to enable encryption/decryption at the first and second wireless units 80 and 82 while the wireless communications systems 84 and 86 acts as a conduit for the secure communications. As such, at one end, the first wireless unit 80 uses the common key $CK_c$ to encrypt information which is transmitted through the wireless communications systems 84 and 86 for the second wireless unit 82. The first wireless unit 80 uses the common key $CK_c$ to decrypt information from the second wireless unit 82 received from the first wireless communications system 84 through the second wireless communications system 86. At the other end, the second wireless unit 82 uses the common key $CK_c$ to encrypt information which is transmitted to the second wireless communications system 86 and through the first wireless communications system 84 to the first wireless unit 80. Moreover, the second wireless unit 82 uses the common key $CK_c$ to decrypt information from the first wireless unit 80 received from the second wireless communications system 86 through the first wireless communications system 84.

In certain embodiments, the originating wireless unit and the terminating wireless unit generate session keys CK1 and CK2 respectively as a result of the authentication process. The same CK1 and CK2 are generated respectively in the serving wireless communications systems. Accordingly, the first wireless unit 80 and the first wireless communications system 84 each have a session key $CK_1$ which is derived as a function of the root key $A_{K1}$. The session key CK1 is derived at the first wireless unit 80 and at the home location register for the first wireless unit 80 as a result of the authentication process. The second wireless unit 82 and the second wireless communications system 86 each have a session key $CK_2$ which is derived as a function of the root key $A_{K2}$ at the second wireless unit 82 and at the home location register for the second wireless unit 82. The first and second wireless communications systems 84 and 86 can then generate a common key $CK_c$.

As mentioned above, depending on the embodiment, the common key $CK_c$ can be generated in different ways. Key generation techniques are possible which use the session keys CK1 and CK2 or portions thereof as inputs. However, other key generation techniques are possible which use other inputs or additional inputs, such as $A_{key1}$ and $A_{key2}$ or the SSDs for the wireless units (IS-41). One key generation technique could involve using a hashing function. A hash function such as the functions known as known as SHA-1, MD5, RIPE-MD, can be typically characterized as a function which maps an input of one length to an output of another, and given an output, it is not feasible to determine the input that will map to the given output.

The first and second wireless communications systems 84 and 86 can mutually agree on a common session key CKc. This mutual key agreement and exchange can be performed using any of a number of public key or private key schemes and/or key exchange protocols. For example, the first and second wireless communications systems 84 and 86 can perform a Diffie-Hellman key exchange using CK1 and CK2 and generate CKc in the following manner. The first wireless communications system 84 lets A= $(g^{CK1})$ mod p and sends A to the second wireless communications system 86 which takes A and generates the common key CKc as $CK_c = A^{CK2}$ mod p. The second wireless communications system 86 lets B= $(g^{CK2})$ mod p and sends B to the First wireless communications system takes B and generates the same common key CKc as $CK_c = B^{CK1}$ mod p. In the above, p is a large prime number (e.g. 1024 bits) and g is a generator of p. Both p and g can be known publicly. As described for the previous example, p can be a strong prime number in that p/2-1 is also prime, and g is a generator of p if g < p and there exists a number x where $g^x$ mod p is between 1 and p-1 and there is at least one value of x for every number between 1 and p-1.

In an example using public keys, the first and second wireless communications systems 84 and 86 each have a pair of public-private keys ($PK1_{public}$ and $PK1_{private}$) and ($PK2_{public}$ and $PK2_{private}$), respectively. The public key pairs are well established in advance and $PK1_{public}$ and $PK2_{public}$ are publicly known. $PK1_{private}$ and $PK2_{private}$ are known only to the first and second wireless communications systems 84 and 86, respectively. One of the following 2 ways can be used to agree on a common session key K3:

1) The first wireless communications system 84 generates a common key CKc and uses the public key $PK2_{public}$ of the second wireless communications system 86 to encrypt CKc. The first wireless communications system 84 sends the encrypted CKc to the second wireless communications system 86. The second wireless communications system 86 receives the encrypted CKc and uses $PK2_{private}$ to decrypt it, recovering CKc.

2) The second wireless communications system 86 generates CKc and uses the public key $PK1_{public}$ of the first wireless communications system 84 to encrypt CKc. The second wireless communications system 86 sends the encrypted CKc to the first wireless communications system 84. The first wireless communications system 84 receives the encrypted CKc and uses $PK1_{private}$ to decrypt it, recovering CKc.

In an example using a trusted key distribution center (KDC) and digital signature, the first and second wireless communications systems 84 and 86 each have a pair of public-private keys ($PK1_{public}$ and $PK1_{private}$) and ($PK2_{public}$ and $PK2_{private}$), respectively. In addition, the KDC (not shown, which is communicatively coupled in some fashion to the first and/or second wireless communications systems 84 and/or 86) also has a public-private key pair $K_{KDC\_public}$ and $K_{KDC\_private}$. The public-private key pairs are well established in advance and $PK1_{public}$, $PK2_{public}$, and $K_{KDC\_public}$ are publicly known. $PK1_{private}$, $PK2_{private}$, and $K_{KDC\_private}$ are known only to the first wireless communications system 84, the second wireless communications system 86, and the KDC, respectively.

The KDC generates a common key CKc, signs CKc with its private key $K_{KDC\_private}$, encrypts the signed CKc with the public key $PK1_{public}$ of the first wireless system 84 and sends it to the first wireless system 84. The first wireless system 84 decrypts the message with $PK1_{private}$ and verifies CKc using the KDC's public key $K_{KDC\_public}$. The KDC also encrypts the signed CKc with the public key $PK2_{public}$ of the second wireless communications system 86 and sends it to the second wireless system 86. The second wireless system 86 decrypts the message with $PK2_{private}$ and verifies CKc using the KDC's public key $K_{KDC\_public}$.

At this point from using either one of the three examples above, CKc is ready to be distributed to the first and second wireless units 80 and 82. The first wireless communications system 84 sends the common key $CK_c$ encrypted using the session key $CK_1$ to the first wireless unit 80. The second wireless communications system 84 sends the common key $CK_c$ encrypted using the session key $CK_2$ to the second wireless unit 82. The first and second wireless units 80 and 82 now can communicate securely using $CK_c$ as the common encryption/decryption key. Additionally, the first and second wireless communications systems 84 and 86 no longer need to decrypt and re-encrypt the communications between the first and second wireless units 80 and 82.

As described above, once the common key CKc is generated and distributed to the wireless units, the common key can be used in an encryption process performed at the wireless units, such as a standard encryption method known as Data Encryption Standard (DES) or Advanced Encryption Standard (AES). Depending on the embodiment, the at least one common key CKc can be used to encrypt/decrypt or conceal/reveal communications between the wireless units while the first and second wireless communications systems 84 and 86 may simply acts as a conduit for the encrypted, ciphered or concealed communications. As mentioned above, encryption/decryption used herein encompasses concealing/revealing or ciphering/deciphering the communications between the wireless units. By having the wireless units perform encryption/decryption using at least one common key for encryption and decryption, the first and second wireless communications systems 84 and 86 are alleviated from performing encryption/decryption of the communications between the wireless units 80 and 82. Depending on the embodiment, the common key CKc can be used in different encryption/decryption or security processes at the wireless units 80 and 82, such as a symmetric encryption standard where the same common key can be used to encrypt and decrypt the communications between the wireless units 80 and 82. In other embodiments a plurality of common keys are used.

Thus, the described common key security system provides a common key for secure communications between wireless units without the need for the serving wireless communications system(s) to provide decryption and re-encryption of communications between the wireless units. Thus, the wireless communications system(s) can simply act as a conduit for the secure communications between the wireless units with the wireless units performing the encryption/decryption (ciphering/deciphering or concealing revealing) using at least one common key or portion(s) thereof. The common key can be used to provide secure communications in a variety of ways, for example by encrypting/decrypting, concealing/revealing and/or message authentication. In the embodiments described above, the common key is a session encryption key, but depending on the embodiment, the common key can be an encryption, session and/or other type of key or key value. In other embodiments, where the common key is used as an integrity key, the wireless communications system(s) will be alleviated from performing message authentication which can be accomplished at the first and second wireless units.

In accordance with an aspect of embodiments of the common key security system, secure distribution of the common key to a wireless unit is provided by encrypting the common key using a key generated as a result of the authentication process for the wireless unit. In the embodiment described above, the key used to generate and encrypt the common key value is a session key which is generated for the duration of each call or connection. The common key is also a session key. Other types of key values can be used. Additionally, embodiments of the common key security system provide secure generation and distribution of the common key between wireless communications systems.

In addition to the embodiments described above, embodiments of the common key security system according to the principles of the present invention can be used which omit and/or add input parameters and/or use different key generation functions and/or encryption/decryption processes and/or use variations or portions of the described system. For example, specific examples of a common key generation process have been described, but other key generation techniques are possible. Additionally, specific embodiments have been described for distributing the common key to the wireless units and to different wireless communications systems, but other embodiments are possible. Furthermore, the common key is described as being used with particular encryption methods, such as a symmetric encryption method, but other encryption, ciphering, concealing, or generating of security codes, such as a message authentication code, and/or decrypting, deciphering, revealing or message authentication processes are possible which use a single or a plurality of common keys or portions thereof. As such, the common key security system alleviates the intermediary wireless communications system from performing the security methods using keys or key values for communications over links between each wireless unit and the wireless communications system. Instead, the wireless units on a call use the common key to perform the security methods at the wireless units. As such, in the embodiments described above, the wireless units on the call can perform end-to-end encryption and decryption while the wireless communications system(s) simply act as a conduit for the communications. During handoffs, the wireless units can retain the common keys, and the base stations and/ or MSCs do not need to pass the keys.

It should be understood that different notations, references and characterizations of the various values, inputs and architecture blocks can be used. In the described embodiments, particular keys are described in the manner which the keys are generated, distributed and used. Depending on the embodiment, the key values and common key value generated, distributed and used by the common key security system can include the described keys, portions thereof, additional or other types of keys, or other values. Moreover, the common key security system and portions thereof can be performed in a wireless unit, base station, base station controller, home authentication center, home location register (HLR), a home MSC, a visiting authentication center, a visitor location register (VLR), a visiting MSC and/or other sub-system in the serving, visiting and/or home wireless communications system(s).

Additionally, the common key security system has been described in FIGs. 3a and 3b with a first and second serving wireless communications system. A serving wireless communications system can be a home wireless communications system with the home MSC assigned to the wireless unit or a visiting wireless communications system with a visiting MSC which has received the session keys from the home wireless communications system after the wireless unit is authenticated. The HLR, VLR and/or the authentication center (AC) can be co-located at the MSC or remotely accessed. It should be understood that the system and portions thereof and of the described architecture can be implemented in or integrated with processing circuitry in the unit or at different locations of the communications system, or in application specific integrated circuits, software-driven processing circuitry, programmable logic devices, firmware, hardware or other arrangements of discrete components as would be understood by one of ordinary skill in the art with the benefit of this disclosure. What has been described is merely illustrative of the application of the principles of the present invention. Those skilled in the art will readily recognize that these and various other modifications, arrangements and methods can be made to the present invention without strictly following the exemplary applications illustrated and described herein and without departing from the spirit and scope of the present invention.

**Claims**

1. A method of providing secure communications between a first wireless unit (70, 80) and a second wireless unit (72, 82), said method **CHARACTERIZED BY**:

   providing a common key value ($CK_C$) to a first wireless unit and for use in secure communications over at least one wireless communications system (74, 84, 86) between said first wireless unit (70, 80) and said second wireless unit (72, 82) having said common key ($CK_C$).

2. The method of claim 1 **CHARACTERIZED IN THAT** said step of providing comprising the steps of:

   generating a first key value ($CK_1$) corresponding to said first wireless unit (70, 80);

   generating a common key value ($CK_C$); and sending said common key value ($CK_C$) to said first wireless unit using said first key value ($CK_1$).

3. The method of claim 2 **CHARACTERIZED BY**:

   generating a second key value ($CK_2$) corresponding to said second wireless unit (72, 82); and sending said common key value ($CK_C$) to said second wireless unit using said second key value ($CK_2$).

4. The method of claim 2 **CHARACTERIZED IN THAT** said step of generating comprises the step of:

   generating said first key value ($CK_1$) as a function of a first root key ($AK_1$) known only at said first wireless unit (70, 80) and a home wireless communications system (74, 84) for said first wireless unit (70, 80).

5. The method of claim 3 **CHARACTERIZED IN THAT** said step of generating comprises the step of:

   generating said second key value ($CK_2$) as a function of a second root key ($AK_2$) known only at said second wireless unit (72, 82) and at a home wireless communications system (74, 86) for said second wireless unit (72, 82).

6. The method of claim 2 **CHARACTERIZED IN THAT** said step of providing comprises the steps of:

   encrypting said common key ($CK_C$) using said first key value ($CK_1$); and

transmitting said common key ($CK_C$) encrypted with said first key value ($CK_1$) to said first wireless unit (70, 80).

7. The method of claim 3 **CHARACTERIZED IN THAT** said step of providing comprises the steps of:

> encrypting said common key ($CK_C$) with said second key value ($CK_2$); and
> transmitting said common key ($CK_C$) encrypted with said second key value ($CK_2$) to said second wireless unit (72, 82).

8. The method of claim 1 **CHARACTERIZED BY** the step of:

> generating said common key ($CK_C$) as an encryption key.

9. The method of claim 1 **CHARACTERIZED BY** the step of:

> generating said common key ($CK_C$) as a session key.

10. A method of providing secure communications between a first wireless unit (70, 80) and a second wireless unit (72, 82), said method **CHARACTERIZED BY** the step of:

> receiving by a first wireless unit (70, 80) from at least one wireless communications system (74, 84, 86) a common key value ($CK_C$) for use in secure communications over at least one wireless communications system (74, 84, 86) between said first wireless unit (70, 80) and said second wireless unit (72, 82) having said common key ($CK_C$).

## FIG. 1

# FIG. 2α

FIG. 2b

EP 1 248 483 A1

# FIG. 3a

*FIG. 3b*

EP 1 248 483 A1

EP 1 248 483 A1

**European Patent Office**

## EUROPEAN SEARCH REPORT

Application Number

EP 01 30 9272

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 810 754 A (ICO SERVICES LTD) 3 December 1997 (1997-12-03) * column 2, line 40-57 * * column 9, line 51 - column 11, line 53 * * column 13, line 30-52 * | 1-10 | H04Q7/38 |
| X | US 5 410 602 A (FINKELSTEIN LOUIS D ET AL) 25 April 1995 (1995-04-25) * column 4, line 2-62 * | 1,10 | |
| A | HWANG M-S: "DYNAMIC PARTICIPATION IN A SECURE CONFERENCE SCHEME FOR MOBILE COMMUNICATIONS" IEEE TRANSACTIONS ON VEHICULAR TECHNOLOGY, IEEE INC. NEW YORK, US, vol. 48, no. 5, September 1999 (1999-09), pages 1469-1474, XP000912518 ISSN: 0018-9545 * page 1470, left-hand column, line 6 - page 1471, right-hand column, line 10 * | 1-10 | |
| | | | TECHNICAL FIELDS SEARCHED (Int.Cl.7) |
| | | | H04Q H04L |

The present search report has been drawn up for all claims

| Place of search | Date of completion of the search | Examiner |
|---|---|---|
| THE HAGUE | 27 March 2002 | Weinmiller, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 01 30 9272

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2002

| Patent document cited in search report | | | Publication date | Patent family member(s) | | | Publication date |
|---|---|---|---|---|---|---|---|
| EP 0810754 | A | | 03-12-1997 | GB | 2313749 | A | 03-12-1997 |
| | | | | AU | 2909897 | A | 05-01-1998 |
| | | | | CA | 2206247 | A1 | 30-11-1997 |
| | | | | EP | 0810754 | A1 | 03-12-1997 |
| | | | | WO | 9745981 | A1 | 04-12-1997 |
| | | | | JP | 11510668 | T | 14-09-1999 |
| | | | | TW | 398118 | B | 11-07-2000 |
| US 5410602 | A | | 25-04-1995 | EP | 0671091 | A1 | 13-09-1995 |
| | | | | FI | 952405 | A | 17-05-1995 |
| | | | | IL | 110822 | A | 22-02-1998 |
| | | | | JP | 8504073 | T | 30-04-1996 |
| | | | | WO | 9509498 | A1 | 06-04-1995 |

EPO FORM P0459